# EUROPEAN PATENT APPLICATION

(11) **EP 2 623 444 A1**
(43) Date of publication of application: **07.08.2013**
(21) Application number: 13153988.4
(22) Date of filing: 05.02.2013
(51) Int. Cl.: B65G 67/08, B65G 67/20

(54) **Apparatus for loading and unloading a transport vehicle.**

(30) Priority: 06.02.2012 IT TO20120093
(71) Applicant: Soremartec S.A., 6700 Arlon (BE); Ferrero S.p.A., 12051 Alba (Cuneo) (IT); Ferrero Offene Handelsgesellschaft m.b.H., 35260 Stadtallendorf (DE)
(72) Inventor: Federici, Fabio, IT-12051 ALBA (Cuneo) (IT)
(74) Representative: Rambelli, Paolo

(57) **Abstract**

A trolley for a loading and unloading apparatus capable of transferring a load onto a platform (P) of a vehicle (V) and of picking up said load from the vehicle to transfer it to an unloading bay, comprising:
- a frame (12) provided with a plurality of idle wheels (14),
- motorized load conveyor means (16) capable of causing the advancement and/or the backward movement of the load along the trolley,
- at least a first (22a, 24a) and a second (22b, 24b) pair of drive wheels, for the advancement of the trolley, each pair comprising a front drive wheel (22a, 22b) and a rear drive wheel (24a, 24b),
- first motor means (30) capable of simultaneously operating the drive wheels of the first pair, and
- second motor means (32) capable of simultaneously operating the drive wheels of the second pair, where to the drive wheels of each pair are associated hydraulic, pneumatic or electric suspension means (46), interposed between the frame and the respective drive wheel, provided for keeping the drive wheels in contact with and adherent to the ground.

## Description

The present invention refers to a loading and unloading apparatus, capable of transferring and unloading a load, in particular a load supported on a pallet on the platform of a transport vehicle and of picking up said load from the platform of the vehicle to transfer it to an unloading bay.

The reference to a vehicle is not to be understood in a limiting sense and includes any transport means, such as a lorry, a railway wagon or a container.

Motorized loading and unloading apparatuses of roller-bed type are known, comprising a plurality of rollers transverse to the direction of loading which provide for the advancement of the load along the roller-bed, and motor means which provide for the advancement and/or backward movement of the roller-bed along the direction of transfer inside or outside the vehicle.

Loading and unloading apparatuses of the above-mentioned type are for example described in WO01/21514, US 4 355 490, GB 2 175 567, US 3 945 522 and US 3 952 887.

In order to carry out the operation of unloading the vehicle, known apparatuses of the above-mentioned type are generally equipped with a wedge-shaped front component, connected to the front end of the roller-bed, capable of being driven in under the load, until the load itself is supported by the rollers for being transferred to the outside of the vehicle.

In the conventional procedure for loading and unloading, the loading and unloading apparatus is movable along an elongated platform (loading and unloading bay), raised with respect to the ground and the transport vehicle to which the load must be transferred, or from which it must be picked up, and must be positioned with its load platform in alignment with the longitudinal extension of the bay. The bay has, at its front end facing towards the platform of the vehicle, a platform, generally articulated, which acts as a bridge between the bay and the vehicle platform and is normally operated and supported by fluid dynamic actuator means, in such a way that its end which rests on the load platform of the vehicle is able to adapt, during the loading stage, to the height of the vehicle platform; in the course of the operation, this articulated platform therefore assumes an inclined position, whose inclination varies during the course of the operation.

An object of the present invention is to provide an apparatus which facilitates the operation of loading and unloading even in the presence of a misalignment between the longitudinal extension of the platform or bay and the axis of the vehicle's load platform.

Another object of the invention is to provide an apparatus that facilitates the operation of loading and unloading in cases where the apparatus itself, in the process of entering onto the vehicle's load platform or in the process of moving backwards, has to overcome an inclined plane.

In view of these objects, the subject of the invention consists of a trolley for a loading and unloading apparatus, having the characteristics defined in the claims that follow, which constitute an integral and integrating part of the present description.

Another subject of the invention consists of a loading and unloading apparatus comprising a plurality of such trolleys.

Further characteristics and advantages of the invention will be evident from the detailed description which follows, effected with reference to the attached drawings, which are provided by way of non-limiting example, in which:
- fig. 1 is a perspective view of a loading and unloading trolley according to the invention;
- fig. 1A is a second perspective view from a different angle of the trolley of fig. 1;
- fig. 2 is a schematic representation of the hydraulic circuit of the active suspensions applied to the drive wheels of the trolley;
- fig. 3 is a schematic representation which illustrates the operation of the trolley in its path of introduction onto the vehicle's load platform;
- fig. 4 is a schematic representation which illustrates the relative positions of the bay and the vehicle, in the operation of loading and unloading;
- fig. 5 is a schematic representation of the sequence of stages of loading, with the use of the apparatus according to the invention;
- fig. 6 is a schematic representation of the sequence of stages of unloading; and
- fig. 7 is a schematic representation which illustrates two positions a) and b) of a wedge-shaped lead trolley, configured for unloading or for picking up a load of pallets.

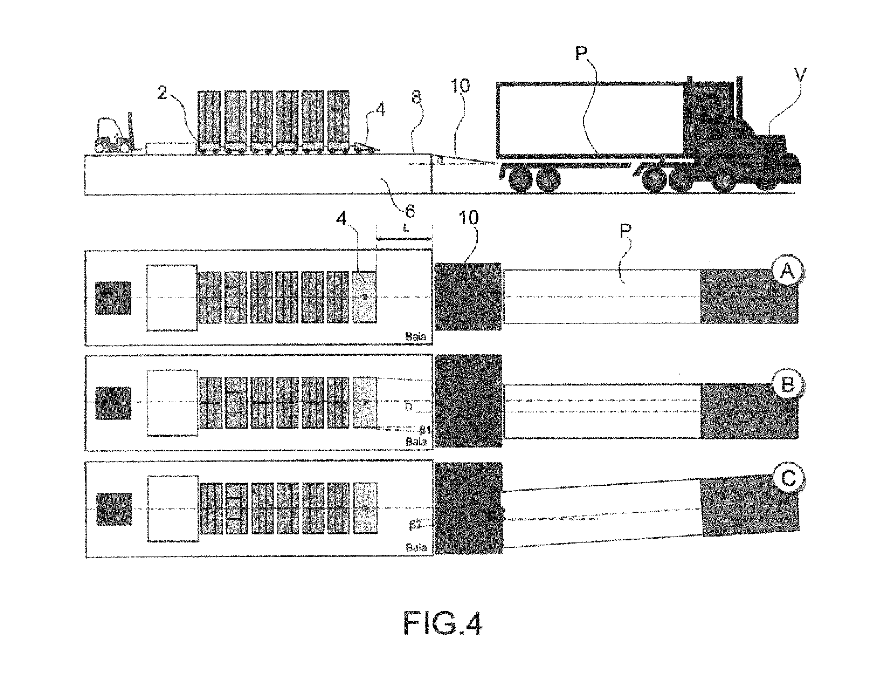

As illustrated schematically in figs. 4, 5 and 6, the apparatus according to the invention comprises a plurality of motorized trolleys 2 for conveying the load, connected to each other by hooking means, so as to form a train of trolleys and a lead trolley 4, for example shaped like a wedge for picking up the load supported on a pallet. The train of trolleys is movable on a support structure or bay 6, having a platform 8 which extends in the longitudinal transfer direction of the load between a loading and unloading station and the platform P of a vehicle V. The bay 6 has, at its front end facing towards the platform P of the vehicle V, an articulated platform 10 which acts as a bridge between the bay 6 and the platform P of the vehicle V which, in a manner itself known, is operated and supported by fluid dynamic actuator means.

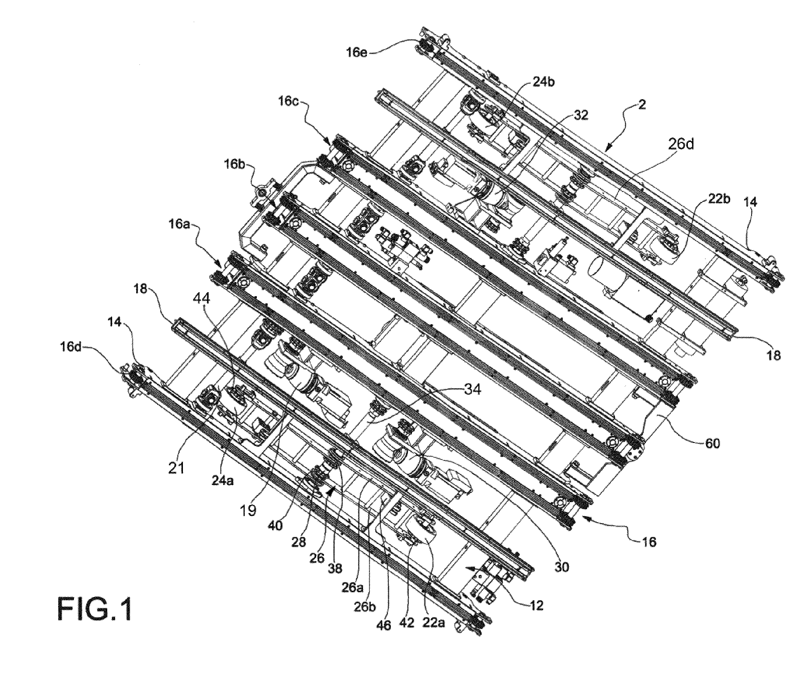

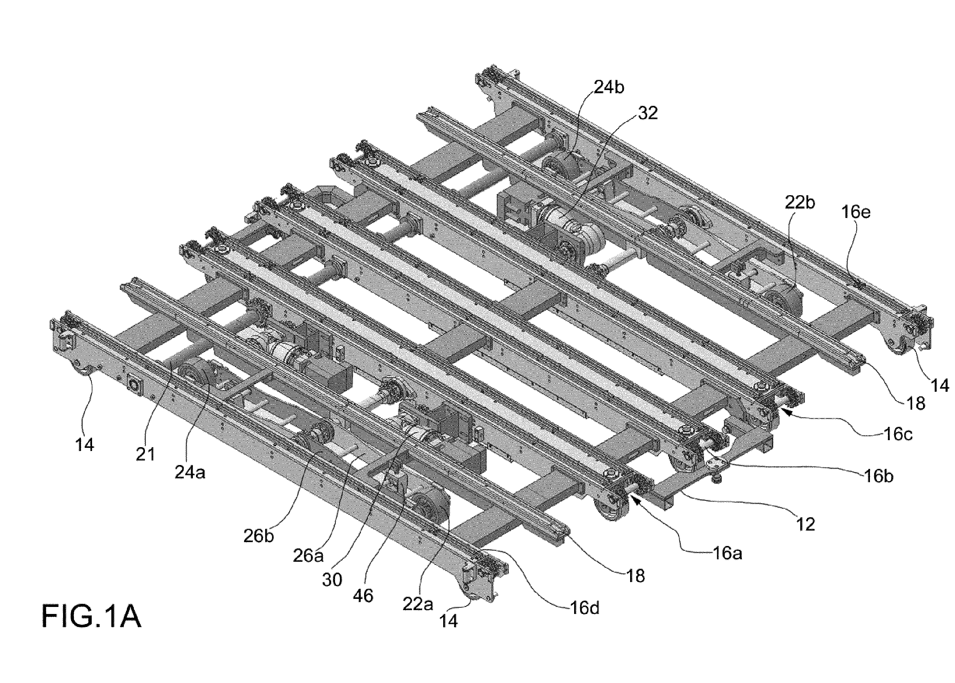

Each trolley 2, illustrated in figs. 1 and 1A, has a support frame 12, provided at its front and rear ends with a plurality of idle (non-motorized) wheels 14 which rest on the platform 8 of the bay 6 and support the load positioned on the frame 12.

The longitudinal and transverse dimensions of the trolley are not themselves binding, provided that the transverse dimension is compatible with the transverse dimension of the platform of conventional loading bays; however, since the load is normally supported on pallets which, as is known, have standardized dimensions with a base of rectangular shape, it is preferable that the dimensions of the trolley should be a multiple of the dimensions of the pallet, in particular that the transverse dimension of the trolley 2 should be generally equal to about twice the largest longitudinal dimension of the pallets and equal to about three times the smallest longitudinal dimension of the pallets themselves, so as to ensure that two or three pallets side by side can be positioned on the trolleys 2.

Each trolley 2 is provided with motorized load conveyor means 16, preferably of the endless chain type, capable of causing the advancement and backward movement of the load which is arranged resting on the active branch of the endless chains, along the trolley 2 and from one trolley to the adjacent trolley.

In each trolley 2, the endless chain conveyor means 16 extend from the front end to the rear end of the trolley and are driven by bi-directional motor means 19, comprising a drive shaft 21 transverse to the direction of transfer of the load.

In the example illustrated, the trolley 2 has, in its central region, three pairs of endless chains 16a, 16b and 16c. Two motorized endless chains 16d and 16e are furthermore provided at the lateral ends of the trolley 2.

The conveyor means can furthermore comprise endless idle chains 18, having the sole function of supporting the load.

Each trolley 2 comprises at least two pairs of motorized wheels which bring about the movement of the trolley in the longitudinal direction of transferring the load and which also allow angular variation of the direction of advancement, according to the methods described below.

Each pair of motorized wheels comprises a front wheel 22a and a rear wheel 24a (respectively 22b and 24b for the second pair of motorized wheels); these wheels are connected to the frame inside the perimeter of the frame and in proximity to its two lateral ends.

In the example illustrated, which constitutes a preferred embodiment, the drive wheels 22a, 24a and, respectively, 22b and 24b of each pair, are mounted at the end of a respective arm 26, oscillating in a vertical plane and articulated to the frame 12 around an axis 28 transverse to the longitudinal extension of the trolley 2; in this example, the arms 26 are formed of a pair of parallel branches 26a and 26b, connected transversely with each other.

The frame 12 has connected to it first motor means 30 which, by means of transmission means, simultaneously drive in rotation the wheels 22a and 24a. Similarly, second motor means comprising the motor 32 simultaneously drive in rotation the wheels 22b and 24b of the second pair of drive wheels.

The drive transmission means comprise a drive shaft 34, transverse to the longitudinal extension of the trolley 2, to which gear wheels 38 and 40 are keyed which, by means of transmission chains not illustrated, rotate gear wheels 42 and 44 which are connected, respectively, to wheels 22a and 24a. The shaft 34 is driven in rotation by the motor 32 by means of a reduction gear with a transmission chain, which engages gear wheels mounted respectively on the shaft 34 and on the shaft of the reduction gear.

For simplicity of illustration, the transmission chains are not illustrated in figs. 1 and 1A. The same applies to the transmission of the drive from the motor 32 to the drive wheels 22b and 24b.

A variation in the direction of advancement of the trolley can be obtained by varying the speed of rotation of motor 30 with respect to the speed of rotation of motor 32 or vice versa, or by stopping one of the two motors. The wheels 22a, 24a and 22b, 24b have only a driving function and do not have a function of supporting the load which, as previously indicated, is supported by means of the idle wheels 14.

To maintain the grip of the drive wheels on the platform 8, each wheel is connected to respective suspension means 46 (hydraulic, pneumatic, electrical or with other operating principle), of hydraulic type in the embodiment illustrated, interposed between the frame 12 and the respective arm 26 to which each wheel is articulated, to exert a thrust on the arm in order to keep the respective wheel in contact with and gripping the ground. Preferably, the hydraulic suspension means are of the type with active suspension which makes it possible to regulate the pressure on the ground and keep it constant to ensure drive and prevent slipping.

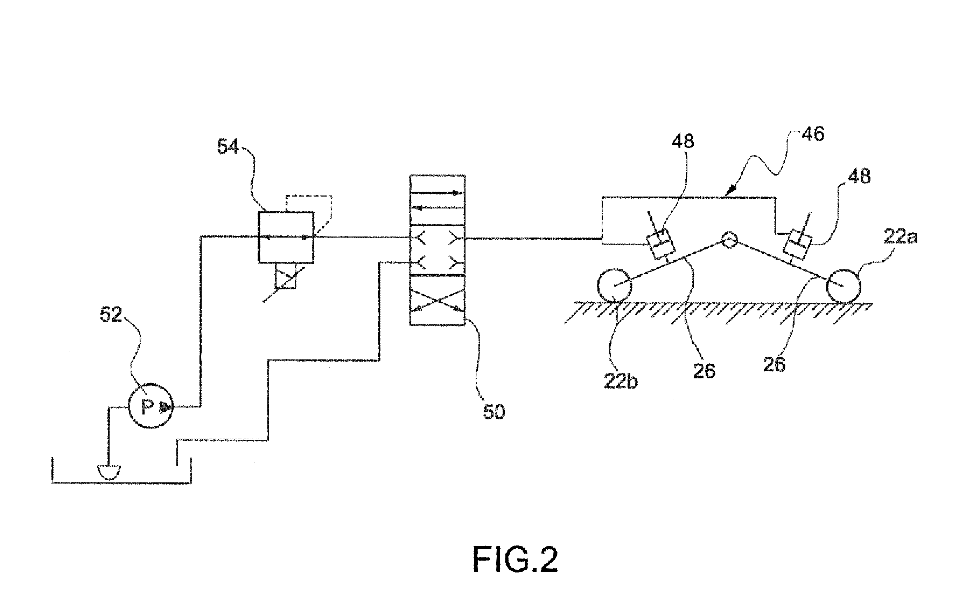

An example of a simplified scheme of the hydraulic system is illustrated in fig. 2.

The hydraulic circuit comprises a first and a second double acting cylinder 48 which act on a respective arm 26; the fluid under pressure is fed to the cylinders 48 by means of a pump 52, a proportional valve 54 and a closed-centre valve 50.

In the event that a drive wheel is subject to slipping or loses adhesion to the ground, as can occur on a ramp or on account of an obstacle, a pressure sensor (not illustrated) indicates a drop in pressure in the double acting cylinder, and on receiving the pressure drop signal, a control unit operates the proportional valve to restore the pressure.

Such a situation can for example occur when the train of trolleys has to overcome the obstacle of the ramp connecting the bay 6 to the load platform P of the vehicle V.

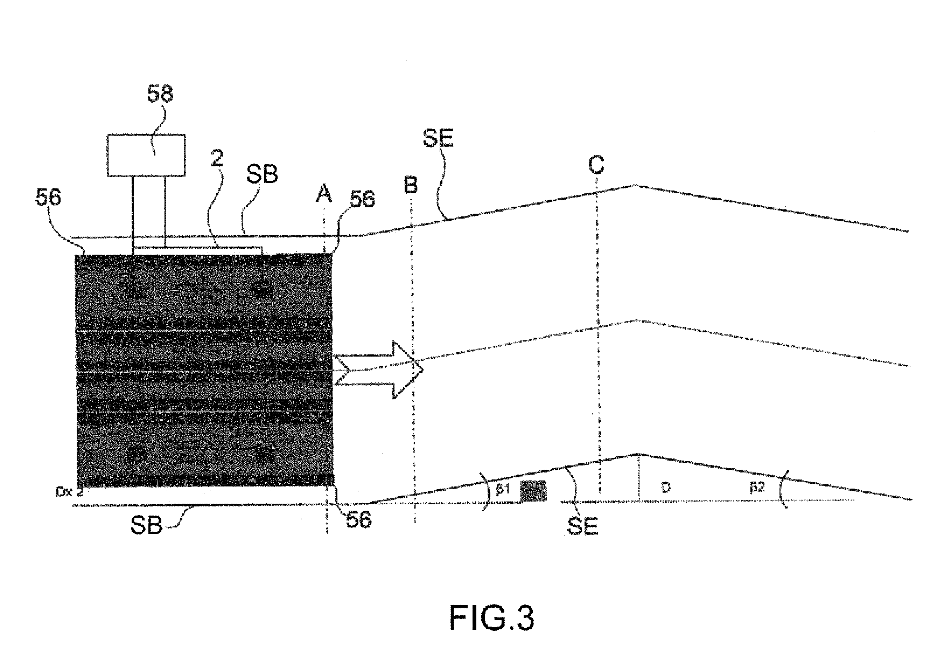

In a preferred embodiment, each trolley has position sensor means 56 (fig. 3) connected to it, for example arranged at the four corners of each carriage. These sensors 56 are arranged to emit a reading signal of the distance between each sensor and the side rails of the platform 8 of the bay 6 and/or the side rails of the transport vehicle V. The signal emitted by the position sensors 56 is received by a control unit 58 which is configured to emit a signal for actuating motors 30 and 32 which operate the drive wheels to determine to determine a correction of the direction of advancement of the trolley, depending on the distance between the lateral edges of the trolley 2 and the rails of the bay 6 or of the vehicle V.

This situation is illustrated schematically in fig. 3, with reference to a single trolley.

In the position indicated by A, in which the longitudinal axis of the trolley 2 is parallel to the side rails SB of the bay 6, the control unit receives from the sensors 56 a signal indicating the parallelism and operates the electric motors 30 and 32, which each operate a pair of drive wheels, so as to maintain the same speed of rotation in each pair of wheels, so that the module advances without a course correction.

In position B, in which the sensors or at least one of the sensors 56 sends to the control unit a signal indicative of the absence of parallelism between the axis of the trolley and the outer rails SE, or of inadequate proximity of at least one sensor to one of the outer rails SE, the control unit orders a course correction by acting on the difference in speed between the wheels of the first pair (right-hand axis) and the wheels of the second pair (left-hand axis).

In position C, in which following the course correction the longitudinal axis of the trolley 2 is once again parallel to the rails, the control unit 58 reinstates the same speed in both pairs of wheels.

The control unit is set up for controlling the advancement of each motorized trolley 2, by ordering the course corrections necessary on each trolley.

Fig. 4 illustrates three relative positions of the transport vehicle with respect to the bay, in which the operation of loading and unloading can be easily managed thanks to the apparatus according to the invention.

In position A, the axis of the vehicle is parallel to and coincides with the axis of the bay; in position B, the axis of the vehicle is offset from, but parallel to, the axis of the bay; and in position C, the axis of the vehicle is inclined and offset with respect to the bay.

With reference to a situation in which the distance L between the front end of the apparatus and the end of the bay is about 4 m, the apparatus allows a manoeuvrability angle of about 1.5° (1° to 2°), totally sufficient for carrying out the operation of loading and unloading; the transport vehicle can thus park in various ways with respect to the axis of the bay, without this causing problems in the loading and unloading procedure, thanks to the fact that each trolley is independent and unconstrained in its own movement with respect to the others.

The trolleys are connected to each other by hooking means 60, connected to the frame of the trolley, preferably by means of an elastic joint.

There can be other front and rear position sensors for indicating to the control and command unit the relative distances between adjacent trolleys, so that the control unit can be set up to correct and modify the speed of advancement of a particular trolley depending on its relative position with relation to the adjacent trolley.

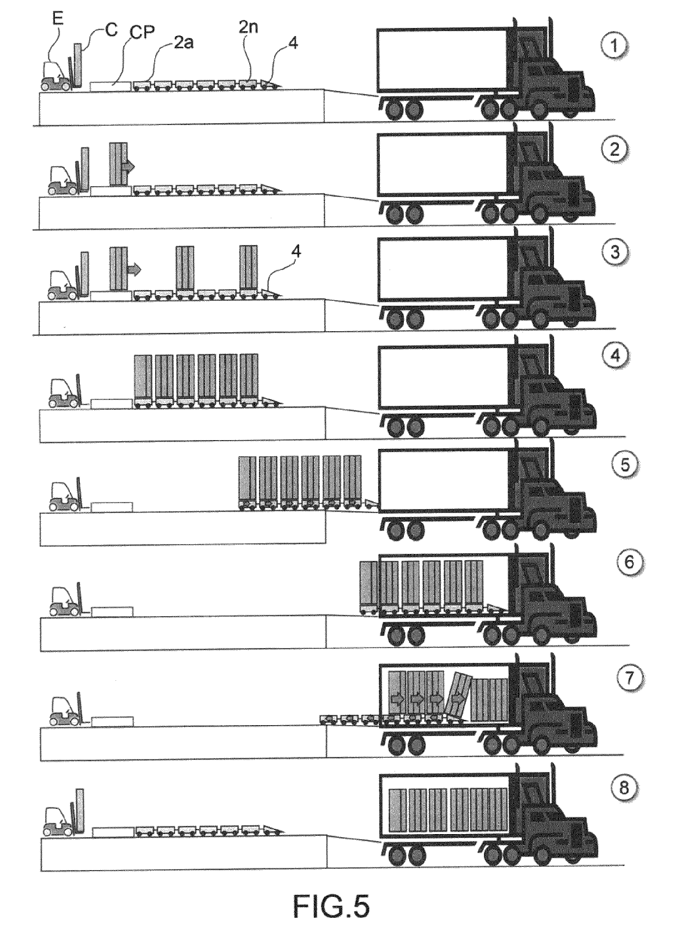

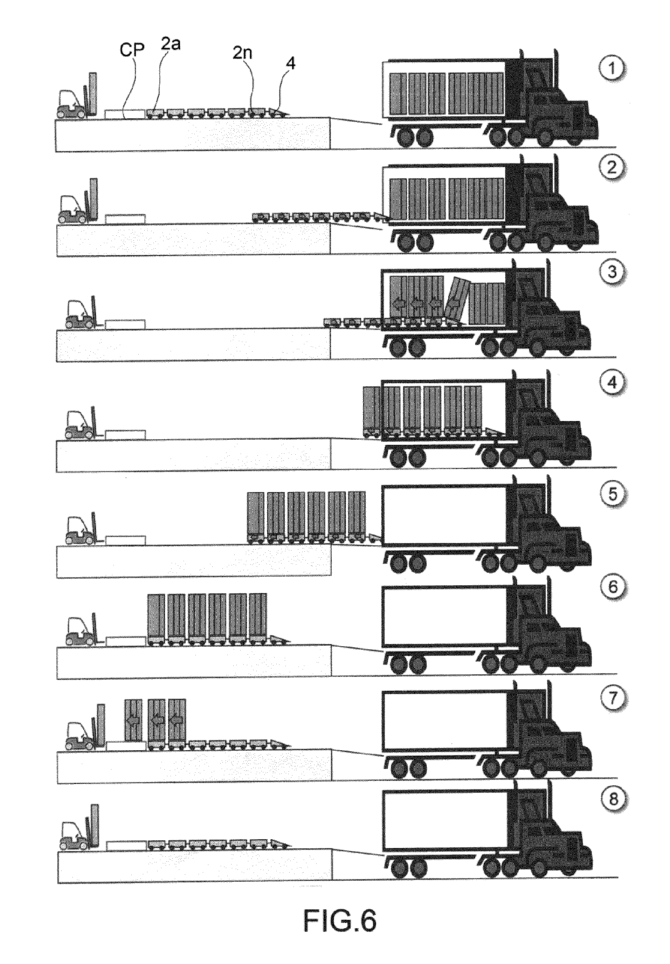

Figs. 5 and 6 illustrate the sequence of operations of loading and unloading.

The loads C, positioned on pallets, are transferred by means of a forklift truck E of conventional type (or by an apparatus with the same function: rollers, chain conveyor etc.), or by means of a laser guided vehicle on a CP compactor which acts as an interface for loading the train of trolleys.

The compactor with CP interface arranges to compact the loads and to transfer them, in a compacted position, onto the trolley in queue 2a. The motorized load conveyor means 16 are activated by the control and command unit to transfer the loads from queue trolley 2a to trolley 2n, immediately adjacent to the wedge-shaped lead trolley 4. Once the load is completed (fig. 5, stage 4), the control unit activates the motors of each trolley to cause the train to advance along the bay, as far as the inside of the vehicle's load compartment (stages 5-7); in these stages, the control unit orders corrections in the direction of advancement of each trolley in the event that the load platform of the vehicle is not perfectly aligned to the longitudinal axis of the bay.

When the position sensors connected to lead compartment 4 indicate that it has reached the stop position against the end wall of the load compartment of the vehicle, the endless chain conveyor means 16 are activated to bring the load onto the lead trolley 4. The unloading operation is carried out by keeping the conveyor means 16 in forward motion and simultaneously activating in the reverse direction the bi-directional motors which operate the drive wheels, in order to bring the train of trolleys out of the vehicle; the speed of backwards movement of the train of trolleys is kept practically equal to the speed of advancement of the conveyor means 16, so that the load is kept in an almost static position, in a longitudinal direction, while it is being deposited onto the vehicle platform.

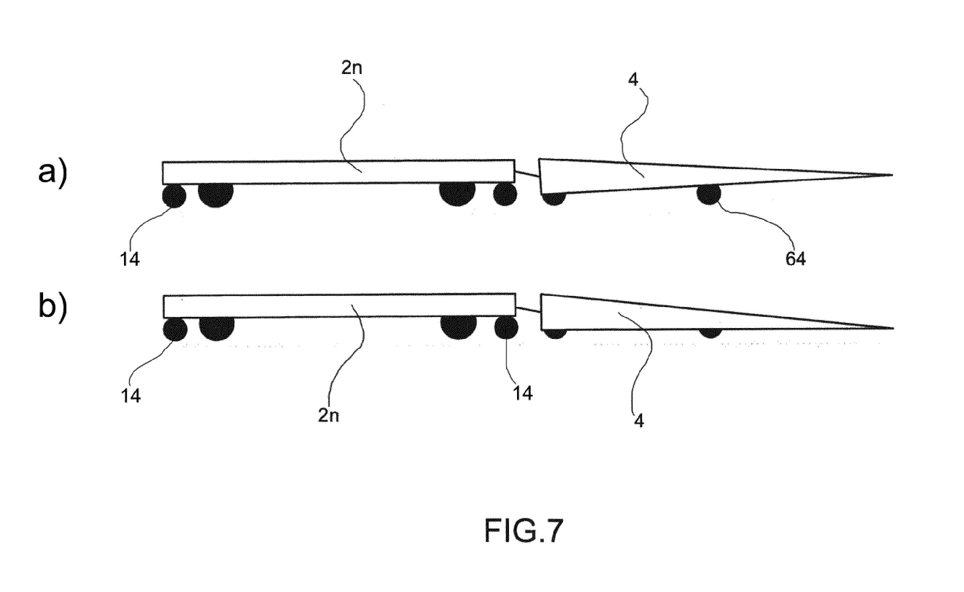

The lead trolley 4 can consist of a trolley of a type which is itself known, provided with conveyor means with an active branch lying in an inclined plane; this lead trolley 4 preferably has no motor drive and is connected to the first trolley 2n of the train of trolleys by means of a fixed drawbar. Preferably, the lead trolley 4 (fig. 7) has hydraulic means (not illustrated) connected to the front wheels 64 which enable the front wheels to be lifted (fig. 7A) to permit them to pass onto the ramp which connects the bay to the vehicle's load platform, and are set up to lower the wheels for the purpose of unloading the pallets onto the ground at the stage of loading the vehicle.

The operation of unloading the vehicle is illustrated in fig. 6, according to stages 1-8, illustrated schematically in this drawing.

The invention thus successfully resolves the problem of providing an apparatus for loading and unloading and particularly an efficient trolley which is at the same time particularly flexible in adapting to different loading and unloading situations.

Naturally, while the construction principle described remains unaffected, the details of embodiment may vary with respect to what has been described in the illustrative example, without departing from the scope of the claims which follow.

## Claims

1. Trolley for a loading and unloading apparatus capable of transferring a load onto a platform (P) of a vehicle (V) and of picking up said load from the vehicle to transfer it to an unloading bay, **characterized in that** it comprises:
- a frame (12) provided with a plurality of idle wheels (14),
- motorized load conveyor means (16) capable of causing the advancement and/or the backward movement of the load along the trolley,
- at least a first (22a, 24a) and second (22b, 24b) pair of drive wheels, for the advancement of the trolley, each pair comprising a front drive wheel (22a, 22b) and a rear drive wheel (24a, 24b),
- first motor means (30) capable of simultaneously operating the drive wheels of the first pair, and
- second motor means (32) capable of simultaneously operating the drive wheels of the second pair, where to the drive wheels of each pair are associated hydraulic, pneumatic or electric suspension means (46), interposed between the frame and the respective drive wheel, provided for keeping the drive wheels in contact with and adherent to the ground.

2. Trolley according to Claim 1, **characterized in that** the drive wheels (22a, 24a, 22b, 24b) of each pair are mounted at the end of a respective oscillating suspension arm (26) and articulated to the frame (12) around an axis (28) transverse to the longitudinal extension of the trolley, said suspension means (46) being arranged to carry on the suspension arm (26) a force capable of pushing the corresponding drive wheel, articulated to the arm, in contact with the ground, in case of loss of contact.

3. Trolley according to Claim 1 or 2, **characterized in that** the suspension means (46) comprise, for each arm, a double acting cylinder (48) connected to the frame (12) and to the suspension arm (26), pressure sensor means being provided for reporting to a control unit a reduction in pressure in the double acting cylinder in case of loss of adhesion of the wheels and being provided an hydraulic circuit (52, 54, 50) designed to restore the pressure in the double acting cylinder (48) when said sensor means signal to said control unit a reduction of pressure in the cylinder.

4. Trolley according to any one of Claims 1 to 3, **characterized in that** said motorized load conveyor means (16) comprise a plurality of endless chains extending from the front end to the rear end of the trolley, driven by bi-directional motor means (19).

5. Trolley according to Claim 4, **characterized in that** said motorized load conveyor means (16) comprise a plurality of pairs of endless chains (16a, 16b, 16c) arranged in the central region of the trolley and at least one endless chain (16d , 16b) arranged adjacent to each lateral end of the trolley.

6. Trolley according to any of the preceding claims, **characterized in that** it also comprises a plurality of non-motorized conveyor endless chains (18).

7. Trolley according to any of the preceding claims, **characterized in that** it comprises position sensor means (56) associated to the lateral ends of the trolley, arranged to emit a reading signal of the distance between said position sensor means and the side rails of the platform (8, V) on which the trolley moves, a drive and control unit (58) being provided to emit a signal for actuating the first (30) and second (32) motor means to determine a correction of the direction of advancement of the trolley according to the reading signal of said distance.

8. Loading and unloading apparatus, comprising a plurality of trolleys according to any one of claims 1 to 7.

9. Apparatus according to Claim 8, **characterized in that** it includes a control unit (58) arranged to drive the drive wheels of each trolley, independently of one another.
